# EUROPEAN PATENT APPLICATION

(11) **EP 2 175 148 A2**
(43) Date of publication of application: **14.04.2010**
(21) Application number: 09252260.6
(22) Date of filing: 23.09.2009
(51) Int. Cl.: F16B 39/00

(54) **Nut retainer**

(30) Priority: 10.10.2008 GB 0818629
(71) Applicant: C P Witter Limited, Deeside Industrial Park Deeside Flintshire CH5 2NY (GB)
(72) Inventor: Edwards, Jonathan, Candy, Oswestry SY10 9BA (GB)
(74) Representative: Every, David Aidan

(57) **Abstract**

A device for positioning a threaded nut relative to an aperture in a component for attachment of a threaded bolt comprising a cage having a nut receiving part and a pair of tongues extending from the cage and locatable relative to the aperture to hold the nut over the aperture, an inwards protrusion on one or both of the tongues for retaining the nut in the cage, one or both of the tongues being resiliently deformable such that, in use, they deform to allow travel of the nut out of the cage, past the inwards protrusion and towards the component when the nut is threaded on to the bolt.

## Description

This invention concerns fasteners.

Towbars, for example, widely use fixed nuts or threaded inserts that are welded or fixed to the towbar. Typically they are welded to towbar components to align with a hole in the component. The fixed nut or threaded insert is used commonly because there is limited access for using a loose nut and bolt.

A problem with using a welded or otherwise fixed threaded nut or insert is that when painted the threads of the nut or insert are contaminated by the paint, such as a polyester powder coating. This leads to bolts becoming obstructed when inserted into the nuts, whereby the joint can be ineffective and fail.

Thread protection or masking using silicone rubber inserts in the nuts is possible and at least partially effective. However, after painting it is necessary to carry out a further operation of cleaning the threads with a tap. This is a slow and hence costly process.

Another complication can arise from any pre-treatment of components prior to painting, such as shot blasting. This pre-treatment provides a better surface for painting, so that an excellent paint finish can be achieved. However, blast treatment materials can become lodged in threads and subsequently become embedded in the paint. These blast grit particles are extremely hard and make the removal of paint from threads even more difficult, so that thread jamming is almost inevitable.

An object of the present invention is to provide a means for adding threaded nuts to components after any finishing treatment.

According to a first aspect of the invention there is provided A device for positioning a threaded nut relative to an aperture in a component for attachment of a threaded bolt comprising a cage having a nut receiving part and a pair of tongues extending from the cage and locatable relative to the aperture to hold the nut over the aperture, an inwards protrusion on one or both of the tongues for retaining the nut in the cage, one or both of the tongues being resiliently deformable such that, in use, they deform to allow travel of the nut out of the cage, past the inwards protrusion and towards the component when the nut is threaded on to the bolt.

The inwards protrusion(s) thus serves to retain the nut in the device such that it does not fall out inadvertently by, for example, inverting the cage but is designed to effect deformation of the tongue so that the nut can pass when it is being threaded on to the bolt towards the component. When in situ, the tongues are connected to the component but still allow the deformation.

The tongues may have outwards lips for retention of the device to the component. The lips may be retained around the edge of an aperture of the component.

The cage may have a base and upstanding opposed sides from each of which may tongue extend. The sides of the cage may be folded up from the base.

According to another aspect of the invention there is provided a combination of the device as defined above and a threaded nut received in the device such that it is prevented from rotation by the cage and/or the tongues.

According to a further aspect of the invention there is provided a component having an aperture fitted with the combination as defined above, the pair of tongues being fixed to the aperture to hold the nut over the aperture.

The aperture may be generally rectangular with a pair of longer sides that have outwardly extended curved bulges.

The tongues are deformable such that they can be inserted through the aperture.

The device of the invention is preferably made as a pressed metal component, especially as a pressed steel component. The sides of the cage are preferably folded up from the base.

The tongues preferably constitute or extend from one pair of opposed sides.

The device of the invention is particularly suitable for use with square nuts and the cage is preferably shaped to accommodate such.

The central part of the aperture is preferably shaped and sized to accommodate a bolt for the threaded nut.

This invention will now be further described, by way of example only, with reference to the accompanying drawings, in which:
Figure 1 shows a fastener according to the invention;
Figure 2 shows a fastener with nut fitted according to the invention;
Figure 3 shows the fastener and nut combination of Figure 2 fitted to a component;
Figure 4 shows the underside of the component of Figure 3;
Figure 5 is a plan view of the component aperture for fitting the combination of Figure 2;
Figure 6 is a perspective view from underneath of the fastener and nut combination with two components to be fastened together;
Figure 7 is a perspective from view of the arrangement of figure 6 with the with the nut tightened down on to two components; and
Figure 8 illustrates the sequence of steps for installing the fastener to the component.

Referring to the accompanying drawings, a fastener 10 for a nut 12 is a pressed steel component shaped and sized to accommodate a square nut 12. The fastener 10 has a square base 14 and sides folded up from the base. One pair of opposed sides 16 are relatively short extending just below the height of a nut 12. The other pair of opposed sides have first parts that are approximately the width and height of a nut 12. The base 14 and sides 16 together form a cage 17 in which the nut is received. Extending from the first parts are second narrower tongues 18 that have convergent sides 20 near their free ends, which are also bent outwards to provide lips 22. The tongues 18 each have a small inwards protrusion 24 in the form of a dimple or the like, past which protrusions a nut 12 can be pushed into the fastener 10 but which will prevent the nut from falling out of the fastener, when it is turned over in order to fit the nut and fastener to an aperture 26 of a component 28.

The size of the base 14 of the fastener and the spacing of the protrusions 24 from the base are intended to allow for axial and lateral movement of a nut 12 in the fastener 10 to cope with any displacement of misalignment of the fixing or component, with which it is to be used.

The base 14 of the fastener 10 has a hole 29 therethrough for a bolt to be threadedly fastened to a nut 12 in the fastener.

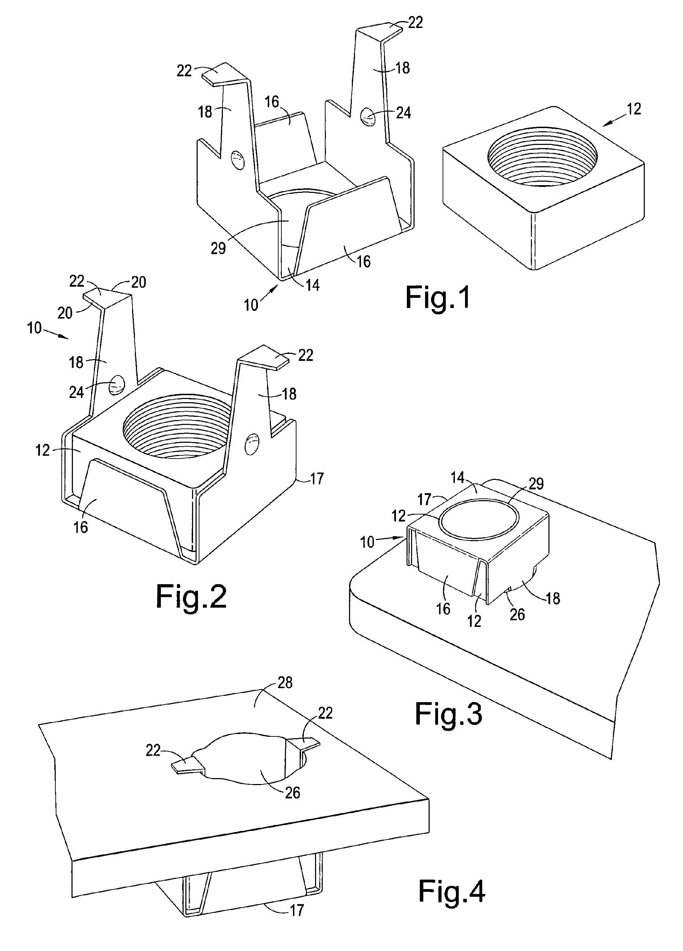

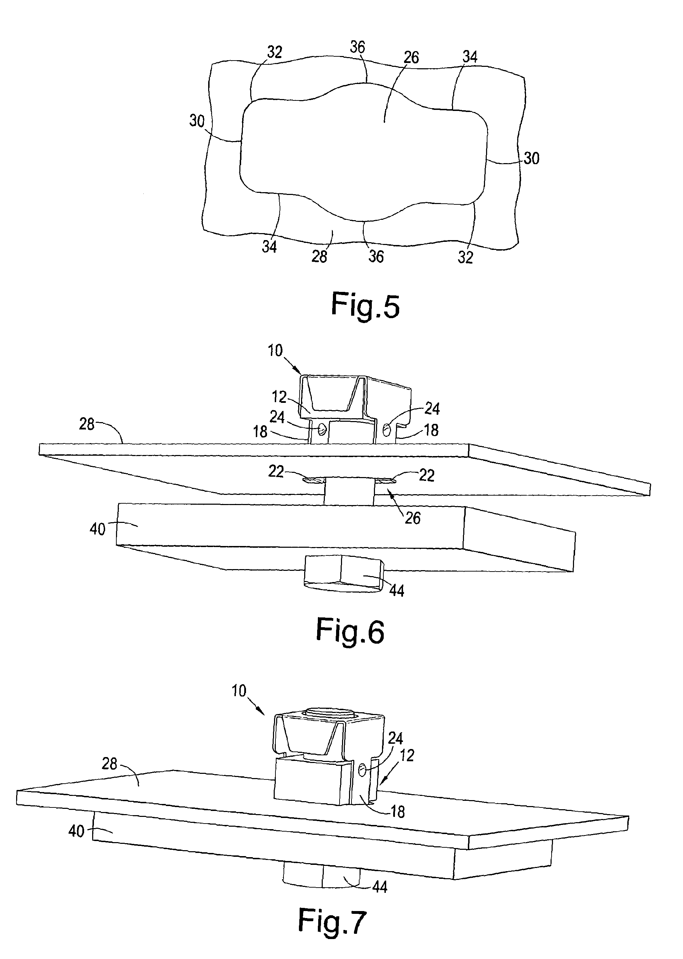

The fastener with nut fitted as shown in Figure 2 is intended to be fitted to an aperture 26 in component 28, particularly but not exclusively of a towbar for a motor vehicle. The aperture 26 is shown in Figure 5 of the accompanying drawings and is generally rectangular. The aperture has a pair of narrower parallel ends 30 that have rounded corners 32 necessitated by the ease of punching the aperture. The aperture has a pair of longer sides 34, each of which has an outwardly curved bulge 36. The region bordered by the bulges is to accommodate a bolt for the nut 12.

In use, a nut 12 is inserted into the fastener 10 past the protrusions 24 of the tongues 18. The nut will then remain in place in the fastener when it is turned over for fitting to an aperture. The tongues 18 of the fastener are inserted through the aperture 26 of the component 28. Some resilient bending of the tongues 18 will facilitate this. The lips 22 at the ends of the tongues then retain the fastener in the aperture by overlapping the component beyond the ends of the aperture.

Then a bolt or the like can be screwed into the bolt from the opposite side of the component to the fastener, which draws the nut 12 on to the component 28. It will be readily apparent that the distance of travel of the nut 12 towards the component 28 depends upon the thickness of that component and the length of the tongues 18. The lips 22 overlap the component on one side and the tongues 18 extend through the aperture 26 and out the other side. The distance the tongues 18 extend from the component to the fastener 10 is the length through which the nut 12 must travel to be drawn on to the component 28. The small inwards protrusions 24 are sufficiently such that the nut may pass them when being drawn on to the component by the force of the torque applied to the bolt.

Figures 6 and 7 illustrate the process of the nut 12 being drawn on to the component. In this example the fastener 10 is supported in an aperture 26 in a first component 28 as described above, with the nut 12 resident in the cage part of the fastener 10. A second component 40 to which the first component 28 is to be fixed has an aperture through which a bolt 44 is received. The head of the bolt 44 rests against the surface of the second component 40 around the aperture and the shank passes through both the apertures 26 and into threaded engagement with the nut 12 which is initially retained in the cage of the fastener 10 by the protrusions 24 (figure 6). As the bolt 44 is rotated the nut 12 is drawn along its thread so that it travels in the axial direction. The nut 12 moves past the protrusions 24 on each of the tongues 18 (which are deflected slightly outwards in the process) and then out of the cage and down on to the surface of the first component 28 (figure 7). The fastener 10 resists rotation of the nut 12 as the bolt 44 is threaded. In particular the cage resists rotation of the nut 12 when it is in the cage (figure 6) and the tongues 18 prevent rotation when the nut 12 has moved out of the cage (figure 7). Tightening of the nut and bolt 12, 44 effectively compresses the lips 22 such that create a depression in the surface of one or both of the components 28, 40. The distance of travel of the nut 12 is dependent on the thickness of the first component 28, the length of the bolt 44 and the length of the tongues 18. The fastener 10 is thus able to accommodate different thicknesses of the first component 28

The shape of the aperture 26 is such that the corners of the nut 12 will bear on the areas of the component 28 either side of the bulges 36 as well as beyond the bulges 36 on opposite sides of the aperture. Thus the load on the nut is spread over a wider area than would be the case for a parallel-sided aperture.

Furthermore, the shape of the aperture in the component provides for a more secure retention of the fastener 10, as it resists the turning tightening force required for high load and torque applications, such as of towbars.

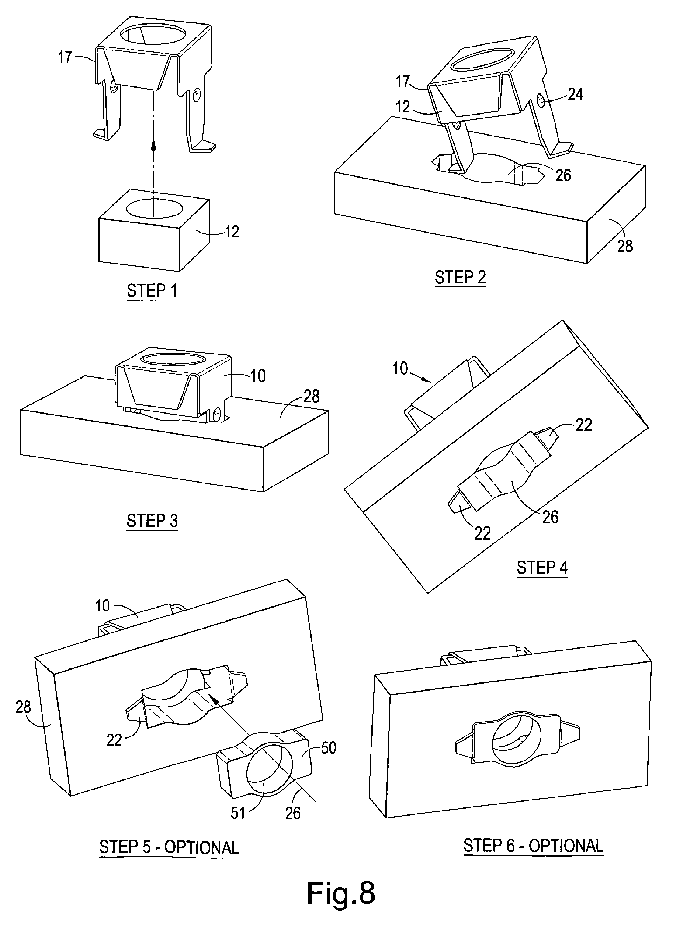

Figure 8 illustrates in more detail the steps involved in connecting the fastener 10 to the component 28. In step 1 the nut 12 is inserted into the cage 17 as described above. In step 2 with the nut 12 retained in the cage 17 by the protrusions 24 a first tongue 18 is inserted through the aperture 26 in the component 28 and the second tongue is pressed inwards so that it can be similarly passed into the aperture 26. With both tongues 18 in the aperture 26 the fastener is pressed down (step 3) until the lips 22 locate against the edges defining the aperture on the underside of the component 28 as shown in step 4. In steps 5 and 6, which are optional steps, a fastener retainer 50 is inserted between the tongues 18 on the reverse side of the component 28 and pushed flush with the component 28. The fastener retainer 50 serves to prevent the tongues being inadvertently deflected inwards towards each other such that the fastener may be released from the aperture 26. The fastener retainer 50 has an outer profile that is designed to fit with the edge defining the aperture in the region between the location of the tongues 18. It also has a central bore 51 for receipt of the bolt.

## Claims

1. A device for positioning a threaded nut relative to an aperture in a component for attachment of a threaded bolt comprising a cage having a nut receiving part and a pair of tongues extending from the cage and locatable relative to the aperture to hold the nut over the aperture, an inwards protrusion on one or both of the tongues for retaining the nut in the cage, one or both of the tongues being resiliently deformable such that, in use, they deform to allow travel of the nut out of the cage, past the inwards protrusion and towards the component when the nut is threaded on to the bolt.

2. A device according to claim 1, wherein the tongues have outwards lips for retention of the device to the component.

3. A device according to claim 1 or 2, wherein the cage has a base and upstanding opposed sides from each of which a tongue extends.

4. A device according to claim 4, wherein the sides of the cage are folded up from the base.

5. The combination of the device of any one of claims 1 to 4 and a threaded nut received in the device such that it is prevented from rotation by the cage and/or the tongues.

6. A component having an aperture fitted with the combination of any one of claims 1 to 5, the pair of tongues being fixed to the aperture to hold the nut over the aperture.

7. A component according to claim 6, wherein the aperture is generally rectangular with a pair of longer sides that have outwardly extended curved bulges.

8. A component according to claim 6 or 7, further comprising a device retainer for retaining the device in the aperture, the device retainer being fitted between the tongues at a location spaced from the nut receiving part so as to prevent the tongues being deflected significantly towards each other.

9. A component according to claim 8, wherein the device retainer has an outer profile that is complementary to the profile of part of the aperture.
